# EUROPÄISCHE PATENTSCHRIFT

(11) **EP 3 813 587 B1**
(45) Veröffentlichungstag und Bekanntmachung des Hinweises auf die Patenterteilung: **30.09.2026**
(21) Anmeldenummer: 19734067.2
(22) Anmeldetag: 26.06.2019
(51) Int. Cl.: A46B 1/00, A46B 3/00, A46B 3/04, A46B 9/00, A46B 9/02, A46B 9/06, A46D 1/00

(54) **APPLIKATOR ZUM AUFTRAGEN EINER KOSMETISCHEN ZUSAMMENSETZUNG**
APPLICATOR FOR APPLYING A COSMETIC COMPOSITION
APPLICATEUR DESTINÉ À ÉTALER UNE COMPOSITION COSMÉTIQUE

(30) Priorität: 28.06.2018 DE 102018115698
(43) Veröffentlichungstag der Anmeldung: 05.05.2021
(73) Patentinhaber: Vinceni Property II GmbH, 68163 Mannheim (DE)
(72) Erfinder: FÜTTERER, Ferdinand, 76532 Baden-Baden (DE)
(74) Vertreter: Reiser & Partner Patentanwälte mbB
(86) Internationale Anmeldenummer: PCT/EP2019/066968
(87) Internationale Veröffentlichungsnummer: WO 2020/002410

(56) Entgegenhaltungen:
- EP-A1- 1 358 818
- WO-A1-2016/174332
- WO-A2-2011/077318
- US-A1- 2017 290 412
- US-A1- 2017 360 179
- US-B1- 6 412 496

## Beschreibung

Die Erfindung betrifft einen Applikator zum Auftragen einer kosmetischen Zusammensetzung auf den menschlichen Körper, umfassend einen im Wesentlichen zylindrischen Basiskörper, wobei von dem Basiskörper Borsten abragen, wobei die Borsten über den Umfang verteilt an dem Basiskörper angeordnet sind.

Derartige Applikatoren kommen zumeist im Zusammenhang mit dem Auftragen verflüssigter Kosmetik im Gesichtsbereich zum Einsatz. Borstenartige Applikatoren kommen beispielsweise zur Aufnahme und zum Auftragen von Mascara, Eyebrow, Concealer und Foundation oder zum Auftragen von Haarpflegeprodukten zum Einsatz. Zum Aufnehmen und Auftragen wird der Applikator in einen Kosmetikbehälter eingetaucht, wobei die Kosmetik nach dem Herausziehen des Applikators an den Borsten anhaftet und dann auf Körperpartien, insbesondere Gesichtspartien, aufgetragen wird.

US 2017/0360179 A1 und US 2017/0290412 A1 beschreiben jeweils einen Applikator zum Auftragen eines kosmetischen Produktes auf den menschlichen Körper. Der Applikator umfasst einen Basiskörper und an einem Ende des Basiskörpers einen mit Borsten versehenen Bereich.

US 6,412,496 B1 beschreibt ein System zum Auftragen eines Produkts auf Wimpern. Das System umfasst einen Applikator mit einem Basiskörper und am Ende des Basiskörpers angebrachte Borsten.

WO 2011/077318 A2 zeigt einen Applikator, bei dem die Borsten unterschiedlich zueinander geneigt sind. WO2016/174332 A1 zeigt einen Applikator mit einer farbigen Klebstoffbeschichtung.

Insbesondere wenn der Basiskörper samt Borsten im Spritzgießverfahren hergestellt wurde, weisen die Borsten herstellungsbedingt einen relativ großen Abstand zueinander auf. Dadurch ist die Aufnahmemenge an Kosmetik begrenzt.

Der Erfindung liegt die Aufgabe zugrunde, einen Applikator bereitzustellen, der eine größere Aufnahmekapazität für Kosmetik und ein angenehmes Handling aufweist.

Diese Aufgabe wird mit den Merkmalen von Anspruch 1 gelöst. Auf vorteilhafte Ausgestaltungen nehmen die Unteransprüche Bezug.

Zur Lösung der Aufgabe sind die Borsten mit Flockfasern ausgerüstet. Vorzugsweise sind dabei die Flockfasern lediglich auf die Borsten aufgebracht, während der Basiskörper frei ist von Flockfasern. Dadurch ergeben sich zwischen den Borsten eine Vielzahl von Zwischenräumen, in welche Kosmetik aufgenommen werden kann. Darüber hinaus eignet sich der erfindungsgemäße Applikator insbesondere zum Auftragen von Kosmetik, welche eine niedrige Viskosität aufweist. Niedrigviskose Kosmetik haftet nicht in ausreichendem Maße an Kunststoffborsten an. Der erfindungsgemäße Applikator weist jedoch im Bereich der Borsten durch die Beflockung eine hohe Porosität auf und ist daher besonders gut geeignet niedrigviskose Kosmetik aufzunehmen und auch wieder abzugeben.

Der Basiskörper ist im Wesentlichen zylindrisch ausgebildet, wobei aber grundsätzlich auch eine konische oder kegelige Gestalt des Basiskörpers mit zur Spitze des Basiskörpers hin abnehmendem Durchmesser denkbar ist. Dabei ist der Basiskörper stets rotationssymmetrisch ausgebildet. Der Applikator samt Basiskörper und Borsten ist im Querschnitt betrachtet rund ausgebildet und eignet sich daher insbesondere zum Eintauchen in ein Kosmetikbehältnis, welches eine Öffnung mit Außengewinde aufweist. Dabei kann der Applikator mit einem Griffstück versehen sein, welches gleichzeitig als Deckel dient und mit einem kongruent zu dem Außengewinde ausgebildeten Innengewinde versehen ist.

Die Borsten sind erfindungsgemäß gleichmäßig über den Umfang verteilt an dem Basiskörper angeordnet. Dabei können die Borsten spiralförmig um den Basiskörper herum angeordnet oder in Axialrichtung ausgerichtet sein. Bevorzugt sind die über den Umfangsbereich des Basiskörpers verteilten Borsten mit Flockfasern ausgerüstet. Bei der Ausgestaltung des Basiskörpers in zylindrischer, konischer oder kegeliger Form verteilen sich die mit Flockfasern versehenen Borsten erfindungsgemäß über den gesamten Umfang des Basiskörpers, also über 360 Grad.

Vorzugsweise bestehen Basiskörper und Borsten aus Kunststoff. Dabei ist denkbar, Basiskörper und Borsten aus unterschiedlichen Materialien auszubilden. Besonders weiche Borsten können durch Verwendung gummielastischer Materialien erzielt werden. Derartige Werkstoffe sind beispielsweise Elastomere, Silikone, Kautschuke, thermoplastische Elastomere oder duroplastische Elastomere.

Vorzugsweise sind die Borsten materialeinheitlich und einstückig mit dem Basiskörper ausgebildet. Dies ermöglicht eine kostengünstige Herstellung eines mit Borsten versehenen Applikators.

Der Basiskörper und die Borsten können aus spritzgießfähigem Kunststoff ausgebildet sein. Bei dieser Ausgestaltung kann der mit Borsten versehene Basiskörper kostengünstig im Spritzgießverfahren hergestellt werden. Es ist nicht erforderlich, die Borsten in einem separaten Arbeitsschritt an dem Basiskörper anzubringen. Um einen mit Borsten versehenen Basiskörper im Spritzgießverfahren herstellen zu können, ist es aber erforderlich, die Borsten regelmäßig anzuordnen und einen Abstand zwischen den Borsten vorzusehen. Der Nachteil der sich hierbei ergebenden relativ großen Zwischenräume wird durch die erfindungsgemäße Ausrüstung der Borsten mit Flockfasern ausgeglichen. Durch die Flockfasern ergibt sich einerseits ein weicher und angenehmer Griff, was vorteilhaft ist, wenn Kosmetik auf sensible Körperpartien aufgetragen werden soll. Ferner ergibt sich im Bereich der Borsten eine Vielzahl kleiner Zwischenräume, welche die Aufnahme einer größeren Menge Kosmetik ermöglichen, wobei gleichzeitig ein gezieltes Auftragen der Kosmetik auf die Körperpartie möglich ist. Bei Verwendung unterschiedlicher Materialien für den Basiskörper und die Borsten kann die Herstellung des Applikators im Wege des Zweikomponentenspritzgusses erfolgen.

Die Borsten ragen erfindungsgemäß radial von dem Basiskörper ab. Dabei können die Borsten in Axialrichtung betrachtet in Reihen angeordnet sein oder den Basiskörper spiralförmig umgeben. Durch die radial abragenden Borsten ergibt sich ein voluminöser Applikator, welcher eine große Menge Kosmetik aufnehmen kann.

Die Flockfasern sind vorzugsweise stoffschlüssig an die Borsten angebunden. Gemäß einem vorteilhaften Verfahren werden zum Beflocken die Borsten des Applikators mit einem Klebemittel versehen und anschließend werden Flockfasern aufgebracht, wobei zur Beflockung ein auf den Applikator einwirkendes elektrostatisches Feld aufgebaut wird, was dazu führt, dass die Flockfasern in das Klebebett eintauchen und sich erfindungsgemäß im Wesentlichen senkrecht zur Oberfläche der Borsten ausrichten. Dabei ist das Klebemittel vorzugsweise so auf den Applikator aufgebracht, dass dieses lediglich die Borsten benetzt, während der Basiskörper frei ist von Klebemittel. Dadurch kann verhindert werden, dass sich Flockfasern und Klebemittel am Basiskörper anlagern und dadurch die freie Länge der Borsten verringern.

Dabei können Flockfasern eingesetzt werden, die einen Titer von 3,3 dtex oder weniger und eine Länge von 1,2 mm oder weniger aufweisen. Vorzugsweise werden Flockfasern mit einem Fasertiter zwischen 0,9 dtex und 1,7 dtex gewählt. Die Länge der Flockfasern beträgt vorzugsweise zwischen 0,3 mm und 0,7 mm.

Nach dem Auftragen sind die Flockfasern fest auf den Borsten des Applikators befestigt und ragen senkrecht von den Borsten ab. Dadurch weisen die Borsten und damit auch der Applikator einen deutlich weicheren Griff auf und der Applikator ist in der Lage, eine größere Kosmetikmenge zwischen den Borsten aufzunehmen.

Dabei ist die Menge der durch den Applikator aufgenommenen und wieder abgegebenen Kosmetik besonders groß, wenn der Basiskörper frei ist von Flockfasern.

Der erfindungsgemäße Applikator eignet sich insbesondere zum Auftragen von Augenbrauenkosmetik und zum Auftragen von Wimpernkosmetik. Sowohl Augenbrauenkosmetik als auch Wimpernkosmetik wird vorwiegend mittels bürstenartiger Applikatoren aufgetragen. Der erfindungsgemäße Applikator, bei welchem die Borsten mit Flockfasern ausgerüstet sind, ist in diesem Zusammenhang besonders vorteilhaft. Durch die Flockfasern weist der Applikator einen weichen Griff auf, was ein schonendes Auftragen von Kosmetik ermöglicht. Ferner kann in den Zwischenräumen zwischen den beflockten Borstenspitzen eine große Menge an Kosmetik aufgenommen werden, welche wiederum gezielt auf die gewünschten Areale aufgetragen werden kann.

Einige Ausgestaltungen des erfindungsgemäßen Applikators werden nachfolgend anhand der Figuren näher erläutert. Diese zeigen, jeweils schematisch:
Fig. 1 einen Applikator mit linienförmig angeordneten Borsten;
Fig. 2 einen Applikator mit spiralförmig angeordneten Borsten.

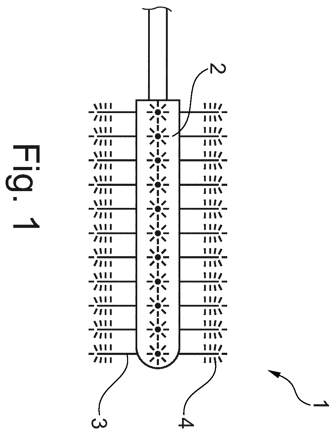

Figur 1 zeigt einen Applikator 1 zum Auftragen einer kosmetischen Zusammensetzung auf den menschlichen Körper. Gemäß einer vorteilhaften Verwendung dient der Applikator 1 zum Auftragen von Augenbrauenkosmetik und Wimpernkosmetik.

Der Applikator 1 umfasst einen zylindrisch ausgebildeten Basiskörper 2, wobei von dem Basiskörper 2 Borsten 3 abragen. Dabei sind die Borsten 3 um den Umfang des Basiskörpers 2 herum verteilt angeordnet. Die Borsten 3 sind materialeinheitlich und einstückig mit dem Basiskörper 2 ausgebildet. Der Basiskörper 2 und die Borsten 3 sind aus spritzgießfähigem Kunststoff ausgebildet. Die Borsten 3 ragen radial von dem Basiskörper 2 ab. Gemäß einer alternativen Ausgestaltung ist der Basiskörper 2 kegelförmig ausgebildet und weist einen zur Spitze hin abnehmenden Durchmesser auf.

Die um den Umfang des Basiskörpers 2 verteilt angeordneten Borsten 3 sind mit Flockfasern 4 ausgerüstet, wobei die Flockfasern 4 stoffschlüssig an die Borsten 3 angebunden sind.

Zum Auftragen der Flockfasern 4 auf die Borsten 3 wird ein Klebemittel auf die Borsten 3 aufgebracht und die Flockfasern 4 werden unter Einwirkung eines elektrostatischen Feldes auf die Borsten 3 aufgetragen. Durch die Einwirkung des elektrostatischen Feldes richten sich die Flockfasern 4 senkrecht zur Oberfläche der Borsten 3 aus. Jeweils ein freies Ende der Flockfasern 4 taucht dabei in das auf den Borsten 3 befindliche Klebebett ein. Nach dem Aushärten des Klebemittels sind die Flockfasern 4 fest mit den Borsten 3 verbunden.

Bei der vorliegenden Ausgestaltung weisen die Flockfasern 4 einen Titer von 0,9 dtex auf. Die Faserlänge beträgt 0,3 mm.

Das Auftragen des Klebemittels auf den Applikator 1 erfolgt dabei derart, dass der Basiskörper 2 frei ist von Klebemittel und von Flockfasern 4. Dadurch befinden sich nach Abschluss des Beflockungsvorgangs lediglich auf den Borsten 3 Flockfasern 4.

Der Basiskörper 2 ist ausgebildet, mit dem Stiel eines Kosmetikstäbchens verbunden zu werden. Das Kosmetikstäbchen kann dabei mit einem als Griff ausgebildeten Deckel einer Kosmetikverpackung verbunden sein. Eine Kosmetikverpackung weist den Deckel mit Kosmetikstäbchen und einem Kosmetikbehälter auf.

Bei der Ausgestaltung gemäß Figur 1 sind die Borsten 3 in Axialrichtung betrachtet gleichmäßig und in Reihen angeordnet.

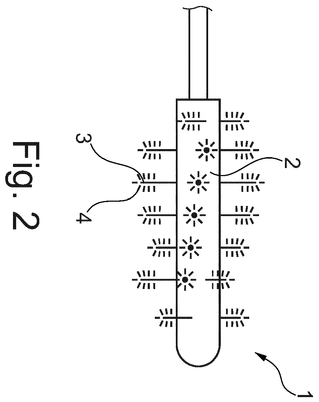

Bei der Ausgestaltung gemäß Figur 2 sind die Borsten 3 spiralförmig um den Umfang des Basiskörpers 2 verteilt angeordnet. Die Länge der Borsten 3 kann dabei variieren.

## Patentansprüche

1. Applikator (1) zum Auftragen einer kosmetischen Zusammensetzung auf den menschlichen Körper, umfassend einen rotationssymmetrischen, im Wesentlichen zylindrischen Basiskörper (2), wobei von dem Basiskörper (2) Borsten (3) in radialer Richtung abragen, wobei die Borsten (3) gleichmäßig über den gesamten Umfang verteilt an dem Basiskörper (2) angeordnet sind, wobei der Applikator (1) samt Basiskörper (2) und Borsten (3) im Querschnitt betrachtet rund ausgebildet ist, wobei die Borsten (3) mit Flockfasern (4) ausgerüstet sind, **dadurch gekennzeichnet, dass** die Flockfasern (4) mittels eines Klebemittels stoffschlüssig an die über den Umfang des Basiskörpers (2) verteilt angeordneten Borsten (3) angebunden sind, und dass die Flockfasern (4) senkrecht zur Oberfläche der Borsten (3) ausgerichtet sind, und dass der Basiskörper (2) frei ist von Klebemittel und von Flockfasern (4).

2. Applikator nach Anspruch 1, **dadurch gekennzeichnet, dass** die Borsten (3) materialeinheitlich und einstückig mit dem Basiskörper (2) ausgebildet sind.

3. Applikator nach Anspruch 1 oder 2, **dadurch gekennzeichnet, dass** der Basiskörper (2) und die Borsten (3) aus spritzgießfähigem Kunststoff ausgebildet sind.

4. Applikator nach einem der Ansprüche 1 bis 3, **dadurch gekennzeichnet, dass** die Flockfasern (4) einen Titer von 3,3 dtex oder weniger aufweisen.

5. Applikator nach einem der Ansprüche 1 bis 4, **dadurch gekennzeichnet, dass** die Flockfasern (4) eine Länge von 1,2 mm oder weniger aufweisen.

6. Verwendung des Applikators (1) gemäß einem der vorherigen Ansprüche zum Auftragen von Augenbrauenkosmetik.

7. Verwendung des Applikators (1) gemäß einem der vorherigen Ansprüche zum Auftragen von Wimpernkosmetik.

## Claims

1. Applicator (1) for applying a cosmetic composition to the human body, comprising a rotationally symmetrical, essentially cylindrical base body (2), wherein bristles (3) project in the radial direction from the base body (2), wherein the bristles (3) are arranged on the base body (2) in a uniformly distributed manner over the entire circumference, wherein the applicator (1), together with the base body (2) and bristles (3), is designed to be round when viewed in cross-section, wherein the bristles (3) are equipped with flock fibres (4), **characterised in that** the flock fibres (4) are bonded to the bristles (3), which are arranged in a distributed manner over the circumference of the base body (2), by material bonded connection by means of an adhesive, and **in that** the flock fibres (4) are oriented perpendicular to the surface of the bristles (3), and **in that** the base body (2) is free of adhesive and of flock fibres (4).

2. Applicator according to claim 1, **characterised in that** the bristles (3) are formed from the same material and as a single piece with the base body (2).

3. Applicator according to claim 1 or 2, **characterised in that** the base body (2) and the bristles (3) are made of injection-mouldable plastic.

4. The applicator as claimed in one of claims 1 to 3, **characterised in that** the flock fibres (4) have a titre of 3.3 dtex or less.

5. Applicator according to one of claims 1 to 4, **characterised in that** the flock fibres (4) have a length of 1.2 mm or less.

6. Use of the applicator (1) in accordance with one of the preceding claims for applying eyebrow cosmetics.

7. Use of the applicator (1) in accordance with one of the preceding claims for applying eyelash cosmetics.

## Revendications

1. Applicateur (1) destiné à appliquer une composition cosmétique sur le corps humain, comprenant un corps de base (2) à symétrie de révolution sensiblement cylindrique, dans lequel des poils (3) se dressent dans la direction radiale depuis le corps de base (2), dans lequel les poils (3) sont disposés sur le corps de base (2) répartis de manière uniforme sur toute la périphérie, dans lequel l'applicateur (1), avec le corps de base (2) et les poils (3), est réalisé de forme circulaire lorsqu'il est vu en coupe transversale, dans lequel les poils (3) sont équipés de fibres floquées (4), **caractérisé en ce que** les fibres floquées (4) sont reliées par liaison de matière aux poils (3) disposés répartis sur la périphérie du corps de base (2) au moyen d'un adhésif, et **en ce que** les fibres floquées (4) sont orientées perpendiculairement à la surface des poils (3), et **en ce que** le corps de base (2) est exempt d'adhésif et de fibres floquées (4).

2. Applicateur selon la revendication 1, **caractérisé en ce que** les poils (3) sont réalisés dans le même matériau que le corps de base (2) et d'un seul tenant avec celui-ci.

3. Applicateur selon la revendication 1 ou 2, **caractérisé en ce que** le corps de base (2) et les poils (3) sont réalisés en matière plastique apte à être moulée par injection.

4. Applicateur selon l'une des revendications 1 à 3, **caractérisé en ce que** les fibres floquées (4) présentent un titre inférieur ou égal à 3,3 dtex.

5. Applicateur selon l'une des revendications 1 à 4, **caractérisé en ce que** les fibres floquées (4) présentent une longueur inférieure ou égale à 1,2 mm.

6. Utilisation de l'applicateur (1) selon l'une des revendications précédentes pour appliquer un cosmétique pour sourcils.

7. Utilisation de l'applicateur (1) selon l'une des revendications précédentes pour appliquer un cosmétique pour cils.
